## Europäisches Patentamt
## European Patent Office
## Office européen des brevets

(11) Numéro de publication: **0 055 204**
**B1**

## FASCICULE DE BREVET EUROPEEN

(45) Date de publication du fascicule du brevet:
**23.01.85**

(21) Numéro de dépôt: **81630075.0**

(22) Date de dépôt: **16.11.81**

(51) Int. Cl.⁴: **C 21 B 7/24,** G 01 J 5/00, F 27 D 21/00

(54) **Procédé et dispositif pour la détermination locale du pouvoir réducteur des gaz dégagés au niveau supérieur de la charge de fours industriels.**

(30) Priorité: **24.12.80 LU 83035**

(43) Date de publication de la demande:
**30.06.82 Bulletin 82/26**

(45) Mention de la délivrance du brevet:
**23.01.85 Bulletin 85/4**

(84) Etats contractants désignés:
**BE CH DE FR GB IT LI NL SE**

(56) Documents cités:
**BE - A - 841 671**
**DE - A - 1 918 247**
**DE - A - 2 632 484**
**DE - B - 1 533 829**
**FR - A - 1 195 029**
**FR - A - 1 239 816**
**FR - A - 1 302 668**
**FR - A - 1 537 314**

**PATENTS ABSTRACTS OF JAPAN, vol. 4, no. 159, (C-30), 6 novembre 1980, page 71C30 (JP)**

(73) Titulaire: **ARBED S.A., Avenue de la Liberté 19, L-2930 Luxembourg (LU)**

(72) Inventeur: **Liesch, Jean, 117 rue de Luxembourg, L-4221 Esch/Alzette (LU)**
Inventeur: **Reiff, Nico, 435 route de Longwy, L-1941 Luxembourg (LU)**
Inventeur: **Reimen, Vlasta, Mme, 41, Kohlenstrasse, L-4053 Esch/Alzette (LU)**
Inventeur: **Schmit, Romain, 16 avenue des Terres Rouges, L-4330 Esch/Alzette (LU)**
Inventeur: **Schummer, Arthur, 68 rue de Luxembourg, L-4221 Esch/Alzette (LU)**
Inventeur: **Simon, Jo, 12 avenue des Terres Rouges, L-4330 Esch/Alzette (LU)**
Inventeur: **Tonteling, Paul, 89 rue de Luxembourg, L-4221 Esch/Alzette (LU)**

(74) Mandataire: **Neyen, René, Administration Centrale de l'Arbed Case postale 1802, L-2930 Luxembourg (LU)**

BUNDESDRUCKEREI BERLIN

## Description

La présente invention concerne un procédé et un dispositif pour la détermination locale du pouvoir réducteur des gaz dégagés au niveau supérieur de la charge de fours industriels, notamment de hauts-fourneaux.

La marche d'un haut-fourneau est optimale lorsque sa charge descend de manière régulière et lorsque sa consommation en combustible est réduite au minimum possible. Ces deux conditions dépendent d'une part de la répartition des gaz réducteurs à travers la charge et d'autre part de l'exploitation optimale de leur pouvoir réducteur.

Pour pouvoir intervenir en vue d'une amélioration voire optimisation de l'exploitation du pouvoir réducteur des gaz, il est nécessaire d'être renseigné, de préférence en continu, sur le profil chimique de la phase gazeuse qui se situe aux abords immédiats du sommet de la charge. Ainsi un renseignement telque par exemple le fait qu'il y a dégagement préférentiel du CO au centre du sommet de la charge, peut prendre aux yeux de l'homme de l'art une signification précise qui le conduira à intervenir d'une manière appropriée.

Une telle intervention peut consister par exemple en une répartition judicieuse des matières enfournées, suivant leur degré de réductibilité, sur la surface de la charge.

Il est connu de déterminer le profil chimique de la phase gazeuse au sommet de la charge en prélevant à l'aide de sondes mobiles des échantillons de gaz dont on détermine la constitution suivant une quelconque technique d'analyse. Il existe en effet des sondes spéciales conçues pour effectuer un balayage aussi poussé que possible de l'espace au-dessus du sommet de la charge. Or ces sondes sont exposées à des températures élevées ainsi qu'à des sollicitations mécaniques; en plus la technique décrite constitue évidemment une procédure d'analyse qui se déroule pas à pas, si bien que le nombre des prélèvements qui est utilement le plus élevé possible, se trouve tributaire du rendement de l'outillage analytique mis en œuvre.

Un progrès notable a été réalisé dans le sens de l'augmentation de la vitesse et du nombre des points de détection, par un procédé qui prévoit de déterminer le profil thermique du sommet de la charge et de mettre en corrélation la température locale mesurée, avec la composition des gaz à cet endroit et ceci à l'aide de graphes d'étalonnage établis au préalable, par exemple par une méthode semblable à celle qui a été décrite plus haut. Néanmoins cette méthode d'analyse par technique infrarouge n'est qu'une méthode indirecte dans le présente contexte et la corrélation entre les mesures recueillies et les renseignements recherchés n'est pas univoque, si bien que les résultats obtenus par cette voie ne sont pas assez fiables pour permettre au métallurgiste d'intervenir d'une manière efficace.

Le but de la présente invention était donc de proposer un procédé rapide et fiable pour la détermination locale du pouvoir réducteur des gaz dégagés au sommet de la charge et ceci en continu et à tout endroit de la surface supérieure de la charge.

Ce but est atteint par le procédé suivant l'invention qui est caractérisé en ce que l'on acquiert en continu une image énergétique totale de l'aire du sommet de la charge, en mesurant en une multitude de points de détection qui couvrent la plage entière du rayonnement émis dans une bande déterminée du domaine spectral, p.ex. entre 1 et 6 μm, que l'on convertit tour à tour ladite image énergétique totale en une image spécifique, en isolant en chaque point de détection le rayonnement émis dans le domaine spécifique aux composés $CO_2$, CO, $H_2$ et $CH_4$, que l'on calcule à partir des intensités mesurées les concentrations respectives des dits composés et que l'on détermine, pour chaque point de détection le pouvoir réducteur recherché.

L'idée qui est à la base de la présente invention consiste à exploiter les possibilités offertes par la technique d'analyse par mesure de l'intensité énergétique du rayonnement émis, par les différents composés chimiques, technique bien connue en soi, et de combiner cette dernière avec la technique d'acquisition d'images, en l'occurence d'images énergétiques qui, converties en images numériques, mettant à la disposition du métallurgiste des résultats de mesure significatifs qui se laissent traduire en les paramètres désirés. C'est surtout le fait de pouvoir acquérir les résultats désirés en tant que profils ou en tant que distributions, qui rehausse l'intérêt que présente le procédé suivant l'invention.

Une première forme d'exécution du procédé prévoit que l'on convertit l'image énergétique totale en une image spécifique, en isolant le rayonnement spécifique à un composé donné par élimination, c'est-à-dire que l'on effectue un filtrage qui élimine le rayonnement dont l'origine est un composé donné, p.ex. le $CO_2$. On obtient à la fin de ce pas une image énergétique qui fournit la distribution de l'intensité de rayonnement de la totalité des composés présents, à part le $CO_2$. Bien qu'une telle image ne présente en tant que telle qu'un intérêt secondaire, elle est d'une importance capitale pour ce qui est des techniques d'étalonnage qui sont indispensables en vue de déterminer les énergies résiduelles ou de fond ainsi que les effets inter-éléments resp. inter-molécules.

Une deuxième forme d'exécution prévoit que l'on convertit l'image énergétique totale en une image spécifique en éliminant l'énergie originaire du fond seul et en ne retenant que l'énergie originaire du composé spécifique donc p.ex. celle du $CO_2$.

Que l'on mette en œuvre la première forme d'exécution du procédé suivant l'invention ou la deuxième ou encore de préférence les deux à la fois, on aura recours à de diverses techniques connues de traitement correctif des valeurs mesurées.

Il y a lieu de relever toutefois que l'on établit des courbes d'étalonnage mettant en corrélation d'une part les intensités énergétiques mesurées et d'autre part les températures et que l'on corrigera ces corrélations pour chaque composé à l'égard des autres composés présents et du fond solide constitué par la charge qui émet du rayonnement.

Il est également important de déterminer et de tenir compte des influences perturbatrices dûes aux poussières et des variations de l'intensité mesurée, dûes à la variation de la hauteur du sommet de la charge.

Le dispositif nécessaire à la mise en œuvre du procédé suivant l'invention comprend notamment une unité (1) de détection de l'énergie de radiation, dotée soit d'une multitude de capteurs individuels, soit d'un système monodétecteur à balayage opto-mécanique, laquelle unité (1) est protégée par une vanne (2) d'isolation. L'unité (1) est disposée à l'extérieur de la paroi de la voûte du four de manière à scruter la surface totale supérieure de la charge. Entre l'unité (1) de détection et la vanne (2) se trouve un module (3) qui comporte les filtres énergétiques spécifiques pour l'élimination des domaines spectraux propres au $CO_2$, au CO, au $H_2$ et au $CH_4$. L'unité (1) de détection est reliée à une unité (5) de traitement des signaux captés qui enregistre également les résultats de mesure qui lui parviennent de la part de dispositifs de mesure respectivement du niveau géométrique (6) de la charge, de l'émissivité (7) de la charge, de la température (8) de la charge et du degré d'émission de poussières (9).

Ainsi la mesure du niveau géométrique (6) de la charge peut être effectuée par un dispositif classique de détermination de niveau dans une enceinte close, tel que le déposant l'a décrit p.ex. dans sa demande de brevet LU 82 830. L'émissivité (7) peut être enregistrée par une quelconque unité de mesure de l'intensité énergétique, comme p.ex. par une unité semblable à l'unité (1), qui fait partie de l'installation suivant l'invention.

Il est évident que l'émissivité de la charge elle-même se situe sur une plage spectrale différente de celle où se situent les rayonnements des gaz. La plage en question doit être suffisamment large pour englober les domaines spectraux propres aux diverses matières enfournées.

Pour la mesure de la température (8), on utilisera de préférence un pyromètre à tête balayeuse, donc également un instrument classique et on surveillera l'émission de poussières (9) à l'aide d'un néphélémètre approprié ou encore par une simple caméra vidéo.

L'unité (5) de traitement des signaux est évidemment un ordinateur doté des programmes nécessaires pour effectuer les différentes conversions et les calculs des concentrations individuelles locales en gaz spécifiques et pour fournir sur un écran de visualisation des images compréhensives montrant la distribution de n'importe lequel des composés gazeux au-dessus de l'aire de la charge, respectivement la distribution du pouvoir réducteur.

D'autres caractéristiques et avantages ressortiront de la descriprions de dessin schématique qui représente de manière non-limitative une forme d'exécution possible du dispositif suivant l'invention.

On distingue l'unité (1) de détection qui est fixée à l'extérieur de la paroi de la voûte du four et qui est protégé par une vanne (2) d'isolation. Entre la vanne (2) et l'unité (1) se trouve un module de filtration (3), manuel ou automatique, à l'aide duquel on peut intercaler entre la caméra (1) et la source de rayonnement, des filtres absorbant dans le domaine spectrale, soit du $CO_2$, soit du CO, soit du $CH_4$, soit encore du $H_2$. Il s'agit de préférence de filtres passe-bande à limite assez étroite.

La caméra (1) est reliée à l'unité (5) de traitement des signaux captés, un ordinateur qui se charge des différentes conversions et qui reçoit à ces fin les signaux issus des instruments ancillaires de mesure du niveau ou du profil géométrique (6) de la charge, de l'émission de son intensité énergétique (7), de sa température (8) et du degré d'émission des poussières (9).

Les modes de conversion, des calculs de correction etc. sont aléatoires dans le sens qu'ils dépendent des commodités offertes par l'instrumentation mise en œuvre, ainsi que des modes de travail préférés par les analystes.

On peut aussi prévoir, suivant une forme d'exécution particulièrement avantageuse, une unité (11) de régulation qui reçoit ses directives de la part de l'ordinateur (5) central. Cette unité (11) est reliée à une installation (12) de distribution qui peut tourner autour de son axe, respectivement pivoter, si bien que l'on peut à l'aide du distributeur (12) répartir les matières à enfourner sur des plages déterminées au sommet de la charge.

Ainsi l'ordinateur (5) peut fournir les consignes nécessaires pour procéder à l'aide du distributeur (12) à la répartition judicieuse des matières suivant leur degré de réductibilité et contribuer à la bonne marche du four.

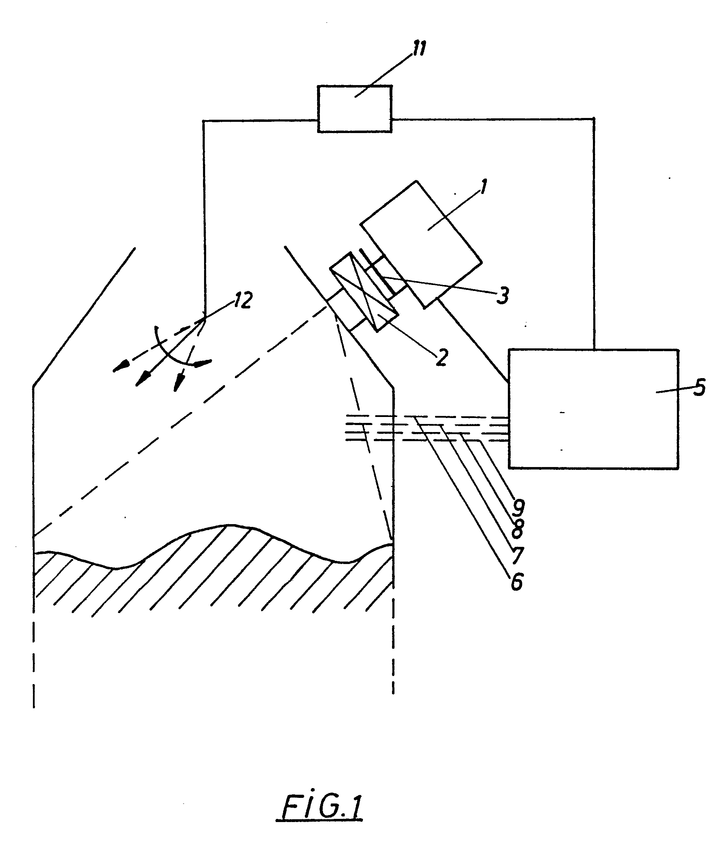

## Revendications

1. Procédé pour la détermination locale du pouvoir réducteur des gaz dégagés au niveau supérieur de la charge de fours industriels, notamment de hauts-fourneaux, caractérisé en ce que l'on acquiert en continue une image énergétique totale de surface supérieure de la charge, en mesurant en une multitude de points de détection qui couvrent la plage entière de ladite surface, l'intensité de l'énergie du rayonnement émis dans une partie adéquate du domaine spectral, que l'on convertit tout à tour ladite image énergétique totale en une image spécifique, en isolant en chaque point de détection le rayonnement émis dans le domaine spécifique

aux composés $CO_2$, CO, $H_2$ et $CH_4$, que l'on calcule à partir des intensités mesurées les concentration respectives des dits composés et que l'on détermine, pour chaque point de détection le pouvoir réducteur recherché.

2. Procédé suivant la revendication 1, caractérisé en ce que l'on convertit l'image énergétique totale en une image spécifique, en éliminant en chaque point de détection le rayonnement spécifique à un composé donné.

3. Procédé suivant la revendication 1, caractérisé en ce que l'on convertit l'image spécifique, en éliminant en chaque point de détection le rayonnement dont l'origine est le fond seul et en ne retenant que le rayonnement dont l'origine est un composé donné.

4. Dispositif pour la mise en œuvre du procédé suivant les revendications 1—3, caractérisé en ce qu'une unité (1) de détection de l'énergie de rayonnement qui est dotée d'une multitude de capteurs individuels, est fixée à l'extérieur de la paroi de la voûte du four de manière à scruter la surface totale supérieure de la charge, laquelle unité (1) comprend un module (3) de filtration absorbant le rayonnement à l'intérieur de domaines spectraux définis, et qu'un ordinateur (5) est relié à ladite unité (1) de manière à recevoir les signaux enregistrés par lesdits capteurs en vue de leur conversion en des valeurs significatives, ainsi qu'à une unité (11) de commande d'un distributeur (12) des matières enfournées qui procède à une répartition des matières suivant leur degré de réductibilité et suivant le distribution du pouvoir des gaz au-dessus de la surface de la charge.

5. Dispositif suivant la revendication 4, caractérisé en ce que l'unité (1) est munie d'un système monodétecteur à balayage opto-mécanique.

6. Dispositif suivant les revendications 4 et 5, caractérisé en ce que l'ordinateur (5) est relié à une unité (6) de mesure du niveau on du profile géometrique de la charge.

7. Dispositif suivant les revendications 4 et 5, caractérisé en ce que l'ordinateur (5) est relié à une unité (7) de mesure de l'intensité énergétique émise par de la charge.

8. Dispositif suivant les revendications 4 et 5, caractérisé en ce que l'ordinateur (5) est relié à une unité (8) de mesure de la température de la charge.

9. Dispositif suivant les revendications 4 et 5, caractérisé en ce que l'ordinateur (5) est relié à une unité (9) de mesure du degré d'émission de poussières au-dessus de la charge.

**Patentansprüche**

1. Verfahren zur Bestimmung des örtlichen Reduziervermögens der Gase, die im oberen Teil der Beschickung von Industrieöfen, insbesondere Hochöfen, entweichen, dadurch gekennzeichnet, daß man kontinuierlich ein totales Energiebild der Chargenoberfläche bestimmt, und zwar durch Beobachtung einer Vielzahl von Meßpunkten, die über die ganze besagte Oberfläche verteilt sind und Messung der Energieintensität in einem geeigneten Abschnitt des Spektralbereichs, daß man das totale Energiebild abwechselnd in ein spezifisches Bild umwandelt indem man an jedem Detektorpunkt die Strahlung, die den spezifischen Verbindungen $CO_2$, CO, $H_2$ und $CH_4$ entstammt, absondert, daß man mittels der gemessenen Intensitäten die Konzentrationen der verschiedenen Verbindungen berechnet, und daß man das jedem Meßpunkt zuzuordnende Reduziervermögen bestimmt.

2. Verfahren gemäß Anspruch 1, dadurch gekennzeichnet, daß man das totale Energiebild in ein spezifisches Bild umwandelt, indem man an jedem Detektorpunkt die für die einzelnen Verbindungen spezifische Strahlung abfiltert.

3. Verfahren gemäß Anspruch 1, dadurch gekennzeichnet, daß das spezifische Bild dadurch umwandelt, daß man an jedem Detektorpunkt die Strahlung, die einzig vom Hintergrund stammt, abscheidet und nur den Strahlungsanteil zurückbehält, der von einer bestimmten Verbindung stammt.

4. Vorrichtung zur Durchführung des Verfahrens gemäß den Ansprüchen 1—3, dadurch gekennzeichnet, daß eine Strahlungsenergie-Detektoreinheit (1), die aus einer Vielzahl individueller Meßfühler besteht, derart an der Ofen-Gewölbewand befestigt ist, daß sie die gesamte Oberfläche der Beschickung übersieht, wobei die Detektoreinheit (1) ein Filter-Modul (3) besitzt, welches die Strahlung innerhalb bestimmter Spektralbereiche abscheidet, und, daß ein Rechner (5) mit besagter Detektoreinheit (1) verbunden ist, so daß er die von besagten Meßfühlern aufgenommenen Signale empfängt im Hinblick auf deren Umwandlung in verwertbaren Daten, sowie mit einer Einheit (11), die einen Beschickungs-Verteiler (12) steuert, welcher eine Verteilung des Materials in Abhängigkeit von dessen Reduzierbarkeit sowie der Verteilung des Reduziervermögens der Gase über der Beschikkungs-Oberfläche vornimmt.

5. Vorrichtung gemäß Anspruch 4, dadurch gekennzeichnet, daß die Detektoreinheit (1) ein Monodetektor-System mit opto-mechanischer Bildzerlegung besitzt.

6. Vorrichtung gemäß den Ansprüchen 4 und 5, dadurch gekennzeichnet, daß der Rechner (5) an eine Einheit (6) angeschlossen ist, welche die geometrische Höhe oder das Profil der Beschikkung mißt.

7. Vorrichtung gemäß den Ansprüchen 4 und 5, dadurch gekennzeichnet, daß der Rechner (5) an eine Einheit (7) angeschlossen ist, welche die Intensität der von der Beschickung stammenden Energiestrahlung mißt.

8. Vorrichtung gemäß den Ansprüchen 4 und 5, dadurch gekennzeichnet, daß der Rechner (5) an eine Einheit (8) angeschlossen ist, welche die Temperatur der Beschickung mißt.

9. Vorrichtung gemäß den Ansprüchen 4 und 5, dadurch gekennzeichnet, daß der Rechner (5) an eine Einheit (9) angeschlossen ist, welche den Staub-Emissionsgrad über der Beschickung mißt.

**Claims**

1. Method for the local determination of the reducing capacity of gases emitted at the top of the charge within industrial furnaces, especially blast furnaces, characterized in that a total energetic image of the top of the charge is continuously monitored by measuring in a multiplicity of detection points, distributed over the entire upper surface, the energy intensity radiated in an adequate part of the spectrum, that the total energy image is converted in turns into a specific image by isolating for each detection point the radiant energy specific to the compounds $CO_2$, $CO$, $H_2$ and $CH_4$, that the concentration of each of said compounds is calculated from the measured intensities and that the reducing power is determined for each detection point.

2. Method according to claim 1, characterized in that the total energy image is converted into a specific image by eliminating at each detection point the radiation specific to a given compound.

3. Method according to claim 1, characterized in that the specific image is converted by eliminating at each detection point the background radiation and keeping only the radiation emitted by a given compound.

4. Apparatus for implementing the method according to the claims 1—3, characterized in that a radiant energy detector unit (1) having a multiplicity of individual sensors is affixed to the furnace wall so as to scrutinize the entire top of the charge, which unit (1) includes a filtering unit (3) which eliminates the radiant energy within specific areas of the spectrum and that a computer (5) is connected to said unit (1) in order to receive the signals registered by said sensors so as to convert them into meaningful data, as well as to a control unit (11) connected to a loading installation (12) which distributes the materials in accordance with their degree of reducibility and the local reducing capacity of gases above the charge top.

5. Apparatus according to claim 4, characterized in that the detector unit (1) comprises a mono-detecting system having an opto-mechanical scanner.

6. Apparatus according to the claims 4 and 5, characterized in that the computer (5) is connected to a unit (6) for measuring the geometrical level or profile of the charge.

7. Apparatus according to the claims 4 and 5, characterized in that the computer (5) is connected to a unit (7) for measuring the energy intensity radiated by the charge.

8. Apparatus according to the claims 4 and 5, characterized in that the computer (5) is connected to a unit (8) for measuring the temperature of the charge.

9. Apparatus according to the claims 4 and 5, characterized in that the computer (5) is connected to a unit (9) for measuring the amount of dust emitted from the charge.

_FIG.1_